# EUROPEAN PATENT SPECIFICATION

(11) **EP 1 096 697 B1**
(45) Date of publication and mention of the grant of the patent: **09.02.2005**
(21) Application number: 00122203.3
(22) Date of filing: 13.10.2000
(51) Int. Cl.: H04B 7/08, H03D 3/00, H04B 1/10, H03G 3/20

(54) **Radio communication system and method for controlling a gain of a receiver portion of the system**
Funkübertragungssystem und Verfahren zur Verstärkungsregelung im Empfängerteil des Systems
Système et procédé de communication radio pour le commande de gain de la partie réceptrice d'un tel système

(30) Priority: 28.10.1999 JP 30725999
(43) Date of publication of application: 02.05.2001
(73) Proprietor: FUJITSU LIMITED, Kawasaki-shi, Kanagawa 211-8588 (JP)
(72) Inventor: Mitsume, Hiroyuki, Nakahara-ku, Kawasaki-shi, Kanagawa 211 (JP)
(74) Representative: HOFFMANN - EITLE

(56) References cited:
- EP-A- 0 715 417
- EP-A- 0 755 133
- WO-A-98/37629
- WO-A-99/35754
- US-A- 4 539 526
- US-A- 4 563 651
- US-A- 5 339 455
- US-A- 5 493 717
- US-A- 5 507 022
- US-A- 5 752 179
- CHUNG-MING YUEN ET AL: "An ultra-fast locking frequency synthesizer algorithm for zero blind slot communication in Digital European Cordless Telephone (DECT)" WIRELES APPLICATIONS DIGEST, 1997., IEEE MTT-S SYMPOSIUM ON TECHNOLOGIES FOR VANCOUVER, BC, CANADA 23-26 FEB. 1997, NEW YORK, NY, USA,IEEE, US, 23 February 1997 (1997-02-23), pages 61-64, XP010226745 ISBN: 0-7803-3318-7

## Description

### BACKGROUND OF THE INVENTION

### 1. Field of The Invention

The present invention generally relates to a radio communication system that is used as a mobile station in a mobile communication system. More particularly, the present invention relates to a radio communication system and a method for controlling a gain of a receiver portion of the radio communication system with a simple configuration.

### 2. Description of The Related Art

With rapid development of mobile communication systems using portable telephones or other radio communication systems (hereinafter, called portable telephones), several attempts have been made to upgrade the communication environment so as to meet the demands of the increase of communication channels between the base station and the mobile stations and the noiseless receiving quality of the mobile stations. For example, the attempts are performed to increase the number of base stations used to relay the communication from the mobile stations, the attempts are performed to optimize the locations where the base stations are installed.

However, a portable telephone may possibly be situated at a location that is too near the base station or too far from the base station. To eliminate the problem, in the mobile communication system of the above type, a transmission power control is carried out in accordance with the distance between the portable telephone and the base station, as follows. That is, a received signal strength of the signal, transmitted by the base station, is measured at the portable telephone, and a measured power of the received signal is notified to the base station by the portable telephone. When this notification is received at the base station, the base station controls the transmission power of the channel for the portable telephone based on the measured power of the received signal sent by the portable telephone, so as to achieve the optimum transmission power for the portable telephone.

Further, a received signal strength of the signal, transmitted to the base station by a corresponding portable telephone, is measured at the base station, and an optimum transmission power for the portable telephone is determined by the based station based on the measured power of the received signal. The base station transmits a control signal to the portable telephone, so that the optimum transmission power of the channel is set at the portable telephone based on the control signal sent by the base station.

Generally, the receiver portion of a portable telephone is designed to achieve an increased level of sensibility to a received signal. However, if the level of sensibility is increased by simply increasing the gain of the receiver portion, a distortion of the received signal waveform occurs due to the non-linearity that appears as the received signal strength increases. In such a case, the dynamic range in practical use becomes significantly narrow.

US-A-5 339 455 discloses how to combat distortions caused by adjacent channel interference.

To widen the dynamic range in practical use, it is desirable that the gain of the receiver portion of the portable telephone, or the level of amplification of the received signal at the receiver portion is properly varied. In conventional radio communication systems, the gain of the receiver portion is controlled by taking one of the following methods.
(1) A variable attenuator is inserted at a certain position of the receiver portion, and the amount of attenuation of the variable attenuator is adjusted so that the gain of the receiver portion is set to a desired value.
(2) A special type low-noise amplifier, which is of gain variable type, is provided in a radio-frequency section of the receiver portion, and the gain of the entire receiver portion is controlled by adjustment of the gain of the low-noise amplifier at the radio-frequency section.

However, one of the important factors that are demanded for radio communication systems, such as portable telephones, is a small-size, lightweight configuration with low power consumption. When the above method (1) is taken, the variable attenuator must be inserted at the position of the receiver portion as an additional component. The total number of components needed for the entire portable telephone is increased, and it is difficult that the above method (1) provide a small-size, lightweight configuration of the radio communication system that needs a wide dynamic range. When the above method (2) is taken, the configuration requiring the special low-noise amplifier at the radio-frequency section is complicated. Further, an additional control circuit is also needed to control the gain of the low-noise amplifier at the radio-frequency section. It is difficult that the above method (2) provide a small-size, lightweight configuration of the radio communication system that needs a wide dynamic range.

### SUMMARY OF THE INVENTION

In order to overcome the above-described problems, preferred embodiments of the present invention provide an improved radio communication system that achieves a wide dynamic range of the receiver portion without causing a distortion of the received signal waveform, by using a simple, small-size configuration.

In order to overcome the above-described problems, the preferred embodiments of the present invention provide an improved radio receiver apparatus that achieves a wide dynamic range without causing a distortion of the received signal waveform, by using a simple, small-size configuration.

Further, in order to overcome the above-described problems, the preferred embodiments of the present invention provide an improved method of controlling a gain of a receiver portion of a radio communication system that achieves a wide dynamic range of the receiver portion without causing a distortion of the received signal waveform, by using a simple, small-size configuration.

According to the present invention there is provided a radio receiver apparatus as defined in the appended independent claim 1, and a method of controlling a gain of a radio receiver apparatus according to the appended independent claim 4. Preferred embodiments are defined in the dependent claims.

### BRIEF DESCRIPTION OF THE DRAWINGS

Other objects, features and advantages of the present invention will become apparent from the following detailed description when read in conjunction with the accompanying drawings.
FIG. 1 is a diagram of a mobile communication system to which one embodiment of the present invention is applied.
FIG. 2 is a block diagram of a receiver portion of a portable telephone to which one preferred embodiment of the radio communication system of the invention is applied.
FIG. 3 is a block diagram of a band switching device in the receiver portion of the portable telephone of FIG. 2.
FIG. 4 is a diagram for explaining insertion loss characteristics of a switch in the band switching device of FIG. 3.
FIG. 5A is a circuit diagram of the switch in the band switching device, and FIG. 5B is a diagram for explaining operation of the switch of FIG. 5A.
FIG. 6A and FIG. 6B are diagrams for explaining insertion loss characteristics of each of first and second band-pass filters in the band switching device.
FIG. 7A is a diagram for explaining a first state of the band switching device with the first band-pass filter being inserted, and FIG. 7B is a diagram for explaining insertion loss characteristics of the band switching device in the first state.
FIG. 8A is a diagram for explaining a second state of the band switching device with the second band-pass filter being inserted, and FIG. 8B is a diagram for explaining insertion loss characteristics of the band switching device in the second state.
FIG. 9 is a block diagram of a control circuit in the radio communication system of the above preferred embodiment.
FIG. 10 is a diagram for explaining an operation of the band switching device in a normal mode.
FIG. 11 is a diagram for explaining an operation of the band switching device in a high-signal-strength mode.
FIG. 12 is a diagram for explaining a change in amplitude of an output signal of the band switching device which is operating in a transient region between the normal mode and the high-signal-strength mode.
FIG. 13A, FIG. 13B and FIG. 13C are diagrams for explaining operations of a modified band switching device in the radio communication system of the invention.
FIG. 14 is a diagram for explaining an operation of a modified band switching device in which a one-input, three-output switch is incorporated in the radio communication system of the invention.

### DETAILED DESCRIPTION OF PREFERRED EMBODIMENTS

According to one embodiment, a radio receiver apparatus comprises: a plurality of band-pass filters each allowing signals lying within a particular one of a plurality of distinct frequency bands to pass through the filter; a selector switch having an input and a plurality of outputs connected to the plurality of band-pass filters, the selector switch delivering a received signal at the input to one of the plurality of band-pass filters via a selected one of the plurality of outputs connected to the one of the plurality of band-pass filters; and a control unit controlling switching of the selector switch in accordance with both a specified frequency contained in the received signal and a receiving level of the received signal, so that the input of the selector switch is connected to the selected one of the plurality of outputs so as to pass the received signal through the one of the plurality of band-pass filters.

According to one embodiment, a radio receiver apparatus comprises: a plurality of band-pass filters each of which allows signals lying within a particular one of a plurality of distinct frequency bands to pass through the filter, the plurality of band-pass filters having insertion loss characteristics that are distinct from each other with respect to an input signal frequency; a selector switch which has an input and a plurality of outputs connected to the plurality of band-pass filters, the selector switch delivering a received signal at the input to one of the plurality of band-pass filters via a selected one of the plurality of outputs connected to the one of the plurality of band-pass filters; and a control unit which controls switching of the selector switch in accordance with both a specified frequency contained in the received signal and a receiving level of the received signal, so that the input of the selector switch is connected to the selected one of the plurality of outputs so as to select one of the plurality of band-pass filters that has the insertion loss characteristics suited to the receiving level of the received signal.

According to one embodiment, a radio receiver apparatus for receiving a signal having specified frequency comprises: a plurality of band-pass filters each of which allows signals lying within a particular one of a plurality of distinct frequency bands to pass through the filter; a selector switch which has an input and a plurality of outputs connected to the plurality of band-pass filters, the selector switch delivering a received signal at the input to one of the plurality of band-pass filters via a selected one of the plurality of outputs connected to the one of the plurality of band-pass filters; and a control unit which controls switching of the selector switch in accordance with a measured power of the received signal at an input of the control unit, so that the input of the selector switch is connected to the selected one of the plurality of outputs so as to pass the received signal through the one of the plurality of band-pass filters.

According to one embodiment, a radio receiver apparatus comprises: a plurality of band-pass filters each of which allows signals lying within a particular one of a plurality of distinct frequency bands to pass through the filter; a selector switch which has an input and a plurality of outputs connected to the plurality of band-pass filters, the selector switch delivering a received signal at the input to one of the plurality of band-pass filters via a selected one of the plurality of outputs connected to the one of the plurality of band-pass filters; and a control unit which controls switching of the selector switch in accordance with a measured power of the received signal at an input of the control unit, so that the input of the selector switch is connected to the selected one of the plurality of outputs so as to pass the received signal through the one of the plurality of band-pass filters, wherein the control unit changes the selected one of the plurality of outputs of the selector switch to another output through the switching of the selector switch when the measured power of the received signal is above a predetermined value, and wherein, after the selected output of the selector switch is changed, the received signal passed through the previously selected band-pass filter is subjected to demodulation in the radio receiver apparatus.

According to one embodiment, a radio communication system receives a signal having a specified frequency from a base station, measures a power of the received signal, and transmits a notification indicative of the measured power of the received signal, to the base station, the radio communication system comprising: a plurality of band-pass filters each of which allows signals lying within a particular one of a plurality of distinct frequency bands to pass through the filter; a selector switch which has an input and a plurality of outputs connected to the plurality of band-pass filters, the selector switch delivering a received signal at the input to one of the plurality of band-pass filters via a selected one of the plurality of outputs connected to the one of the plurality of band-pass filters; and a control unit which controls switching of the selector switch in accordance with a measured power of the received signal at an input of the control unit, so that the input of the selector switch is connected to the selected one of the plurality of outputs so as to pass the received signal through the one of the plurality of band-pass filters, wherein the control unit includes a correction unit which adds an offset value, produced according to an amount of attenuation of the received signal passed through the selected filter, to the measured power of the received signal.

According to one embodiment, a method of controlling a gain of a radio receiver apparatus, comprises the steps of: providing a plurality of band-pass filters each allowing signals lying within a particular one of a plurality of distinct frequency bands to pass through the filter; providing a selector switch having an input and a plurality of outputs connected to the plurality of band-pass filters, the selector switch delivering a received signal at the input to one of the plurality of band-pass filters via a selected one of the plurality of outputs connected to the one of the plurality of band-pass filters; measuring a power of the received signal; and controlling switching of the selector switch in accordance with the measured power of the received signal, so that the input of the selector switch is connected to the selected one of the plurality of outputs so as to pass the received signal through the one of the plurality of band-pass filters.

According to one embodiment, a method of controlling a gain of a receiver portion of a radio communication system that receives a signal having a specified frequency, comprises the steps of: providing a plurality of band-pass filters each allowing signals lying within a particular one of a plurality of distinct frequency bands to pass through the filter, the plurality of band-pass filters having insertion loss characteristics that are distinct from each other with respect to an input signal frequency; providing a selector switch having an input and a plurality of outputs connected to the plurality of band-pass filters, the selector switch delivering a received signal at the input to one of the plurality of band-pass filters via a selected one of the plurality of outputs connected to the one of the plurality of band-pass filters; detecting the specified frequency contained in the received signal and a receiving level of the received signal at an output of said one of the plurality of band-pass filters; and controlling switching of the selector switch in accordance with both the specified frequency contained in the received signal and the receiving level of the received signal, so that the input of the selector switch is connected to the selected one of the plurality of outputs so as to select one of the plurality of band-pass filters that has the insertion loss characteristics suited to the receiving level of the received signal, and to vary an amount of attenuation for the received signal by using the selected band-pass filter.

In the radio receiver apparatus and the radio communication system of the above embodiments, the switching of the selector switch is properly controlled in accordance with the receiving level of the received signal so as to deliver the received signal to the selected one of the plurality of band-pass filters. The radio receiver apparatus and the radio communication system of the above preferred embodiments are effective in achieving a wide dynamic range without causing a distortion of the received signal waveform, by using a simple, small-size configuration.

In the method of controlling the gain of the radio receiver apparatus of the above embodiments, the switching of the selector switch is suitable controlled in accordance with the receiving level of the received signal so as to deliver the received signal to the selected one of the plurality of band-pass filters. The gain controlling method of the above embodiments is effective in achieving a wide dynamic range without causing a distortion of the received signal waveform, by using a simple, small-size configuration.

A description will now be provided of the preferred embodiments of the present invention with reference to the accompanying drawings.

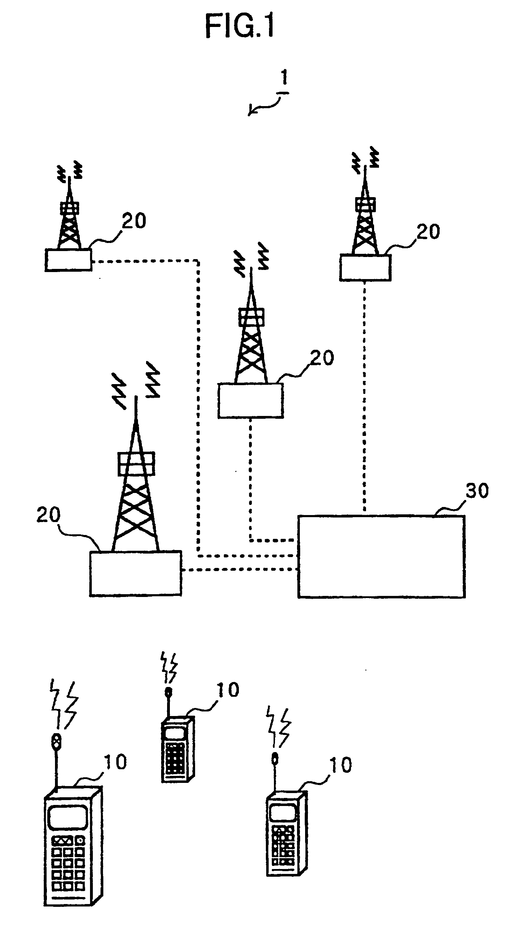

FIG. 1 shows a mobile communication system to which one embodiment of the present invention is applied. The mobile communication system, shown in FIG. 1, is, for example, a personal digital cellular (PDC) mobile telephone system.

As shown in FIG. 1, in the mobile communication system, a plurality of portable telephones 10 are provided as mobile stations, a plurality of base stations 20 are installed at high-rise buildings or the like, and a base-station control equipment 30 is provided to carry out the channel control.

In the mobile communication system of FIG. 1, a mobile exchange (not shown) is connected to the base-station control equipment 30. The portable telephones 10 are connected through the mobile exchange to a public switched telephone network. The portable telephones 10 and the base stations 20 are connected to each other by radio communication paths. The base stations 20 and the base-station control equipment 30 are connected to each other by wired or wireless communication paths.

One embodiment of the radio communication system of the invention is applied to each of the portable telephones 10 in the mobile communication system of FIG. 1. In the present embodiment, it is supposed that the portable telephones 10 are of a dual-band compatible type that is configured to receive a signal lying within a selected one of two frequency bands. A detailed configuration of each portable telephone 10 will be described below.

When a communication channel between the base station 20 (or one of the base stations 20 in FIG. 1) and the portable telephone 10 (or one of the portable telephones 10 in FIG. 1) is established, the base station 20 measures a received signal strength of a signal that is transmitted to the base station 20 by the portable telephone 10, and determines an optimum transmission power for the portable telephone 10 based on the result of the measurement. Then, the base station 20 transmits a control signal to the portable telephone 10, so that the optimum transmission power of the channel is set at the portable telephone 10 based on the control signal sent by the base station 20. Further, the base station 20 receives a notification, sent by the portable telephone 20, which is based on a result of measurement of a received signal strength of a signal that is transmitted from the base station 20 to the portable telephone 10. Then, the base station 20 controls the transmission power of the channel for the portable telephone 10 based on the measured received signal strength sent by the portable telephone 10, such that the optimum transmission power is attained.

A description will now be provided of a configuration of the portable telephone 10.

The portable telephone 10 to which one embodiment of the radio communication system of the invention is applied is configured to receive a specified-frequency signal lying within a selected one of two frequency bands: 810-830 MHz and 870-885 MHz. The specified frequency of the received signal for the portable telephone 10 is notified to the portable telephone 10 by the base station 20 (or by the base-station control equipment 30) when establishing a communication channel between the base station 20 and the portable telephone 10. The portable telephone 10 is provided with a receiving-level detection unit which detects a receiving level or state of the received signal designating the portable telephone 10 as the destination station. The received signal designating the portable telephone 10 as the destination station is included in a transmission signal transmitted by the base station 20, and contains a destination identification of the portable telephone 10.

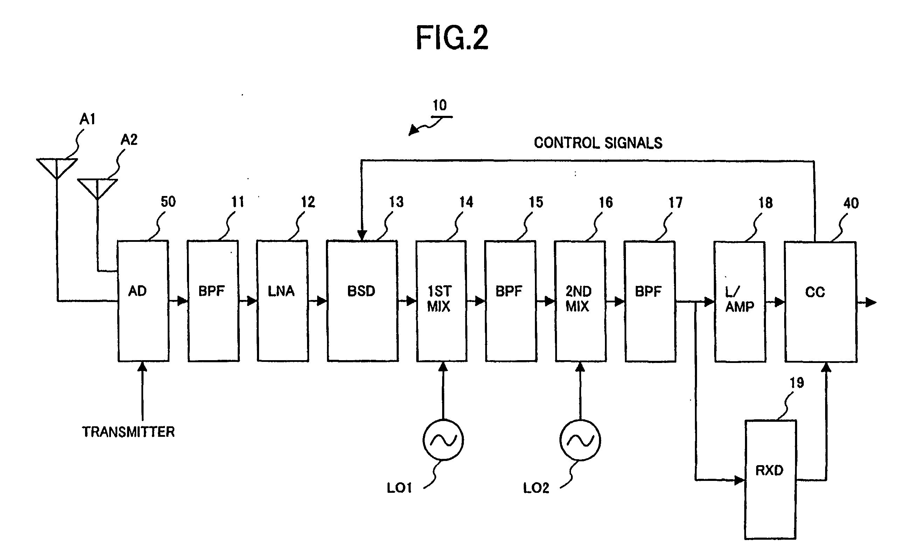

FIG. 2 shows a configuration of a receiver portion of the portable telephone 10 to which one preferred embodiment of the radio communication system of the invention is applied.

In the receiver portion of the portable telephone 10, shown in FIG. 2, a signal transmitted to the portable telephone 10 by the base station 20 is received at one of an antenna A1 and an antenna A2. In the present embodiment, one of the two antennas A1 and A2 is provided for the purposes of transmission and reception, and the other is provided for the purpose of reception only. The received signal is delivered to a low-noise amplifier (LNA) 12 via an antenna duplexer (AD) 50 and a band-pass filter (BPF) 11. The LNA 12 amplifies the received signal that is a low-level radio-frequency signal, and outputs the amplified signal to a band switching device (BSD) 13.

The band switching device 13 controls switching of a selector switch to one of a first band-pass filter BPF1 (810-830 MHz) or a second band-pass filter BPF2 (870-885 MHz) in accordance with control signals CNT1 and CNT2 sent by a control circuit (CC) 40. The radio-frequency signal, output by the BSD 13, is delivered to a first mixer 14.

In the first mixer 14, the radio-frequency signal sent by the BSD 13 is mixed with a local signal output by a local oscillator LO1, so that the first mixer 14 generates a first intermediate-frequency signal from the radio-frequency signal. The first intermediate-frequency signal is passed through a band-pass filter (BPF) 15, and the first intermediate-frequency signal, output by the BPF 15, is delivered to a second mixer 16.

In the second mixer 16, the first intermediate-frequency signal sent by the BPF 15 is mixed with a local signal output by a local oscillator LO2, so that the second mixer 16 generates a second intermediate-frequency signal from the first intermediate-frequency signal. The second intermediate-frequency signal is passed through a band-pass filter (BPF) 17, and the second intermediate-frequency signal, output by the BPF 17, is delivered to each of a limiter/amplifier (L/AMP) 18 and a receiving-level detection unit (RXD) 19.

The received signal, designating the portable telephone 10 as the destination station, is detected from the second intermediate-frequency signal at the receiving-level detection unit 19. Further, the limiter/amplifier 18 outputs an amplified signal that is produced from the second intermediate-frequency signal, to a demodulator section (not shown) of the portable telephone 10. In the demodulator section, the amplified signal output by the limiter/amplifier 18 is subjected to demodulation. The above-described receiver portion of the portable telephone employs a known double-heterodyne scheme. Not only the double-heterodyne scheme but also a known direct frequency conversion technique may be applied to the receiver portion of the portable telephone 10.

The receiving-level detection unit 19 detects a receiving level of the received signal (or a received signal strength indication RSSI) from the second intermediate-frequency signal output by the BPF 17. The receiving-level detection unit 19 supplies a receiving-level signal indicative of the receiving level of the received signal (or indicative of the detected RSSI), to the control circuit 40.

The control circuit 40 receives the specified frequency of the received signal for the portable telephone 10 from the demodulator section (not shown), selects one of the first band-pass filter or the second band-pass filter in the band switching device (BSD) 13 based on the specified frequency, and allows the band switching device (BSD) 13 to control the switching of the selector switch to the selected one of the first or second band-pass filter, in response to the receiving-level signal sent by the receiving-level detection unit 19.

The above-described receiver portion of the portable telephone 10 of FIG. 2 corresponds to the radio receiver apparatus in the claims.

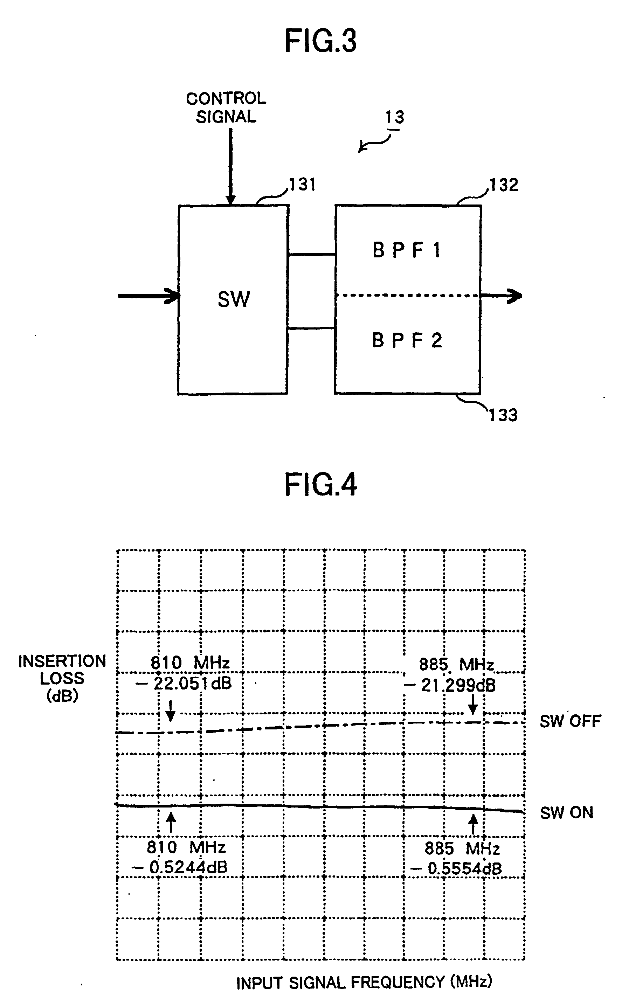

A description will now be provided of the operation of the band switching device 13. FIG. 3 shows a configuration of the band switching device 13 in the receiver portion of the portable telephone of FIG. 2.

As shown in FIG. 3, the band switching device 13 generally includes a selector switch (SW) 131, a first band-pass filter (BPF1) 132, and a second band-pass filter (BPF2) 133. As the portable telephone 10 is of the dual-band compatible type, the BSD 13 of the present embodiment uses the two band-pass filters.

In the band switching device 13 of FIG. 3, the selector switch 131 is a one-input, two-output radio-frequency switching circuit including a first transmission path and a second transmission path, the first transmission path connecting the input with one of the two outputs, and the second transmission path connecting the input with the other of the two outputs. In the first and second transmission paths of the switch 131, active elements are respectively inserted. These active elements are constituted by, for example, a gallium-arsenide field-effect transistor (GaAs FET) or a pin diode. The active elements are turned ON or OFF in response to the control signals CNT1 and CNT2 sent by the control circuit 40. When the active element of one of the first and second transmission paths of the switch 131 is turned ON, the active element of the other path of the switch 131 is turned OFF, such that an insertion loss of one of the first and second paths is larger than an insertion loss of the other path. Generally, an insertion loss of the path in which the corresponding active element is turned OFF is called the isolation.

Alternatively, the selector switch 131 may be constituted by a semiconductor switch of another type or a mechanical switch.

FIG. 4 shows insertion loss characteristics of the selector switch 131 in the band switching device 13 of FIG. 3.

Suppose that the selector switch 131 is a one-input, two-output radio-frequency switching circuit using the active elements made of a GaAs FET, and disconnected from the first and second band-pass filters 132 and 131, and that a 50-ohm terminating circuit is connected to one of the two output terminals of the switch 131 where the corresponding transmission path is in a non-testing condition. The insertion loss characteristics of the switch 131 shown in FIG. 4 are obtained as a result of the single-piece testing of the radio-frequency switching circuit.

In FIG. 4, the solid-line curve indicates the insertion loss characteristics of the switch 131 when the active element of the path being tested is turned ON, and the dotted-line curve indicates the insertion loss characteristics of the switch 131 when the active element of the path being tested is turned OFF.

As shown in FIG. 4, in the present embodiment, the isolation of the switch 131 (or the insertion loss of the path in which the corresponding active element is turned OFF) is set at about 20 dB.

In the above-described embodiment, each of the first and second transmission paths of the selector switch 131 is constituted by a single active element. Alternatively, each of the first and second transmission paths of the selector switch 131 may be constituted by two or more active elements.

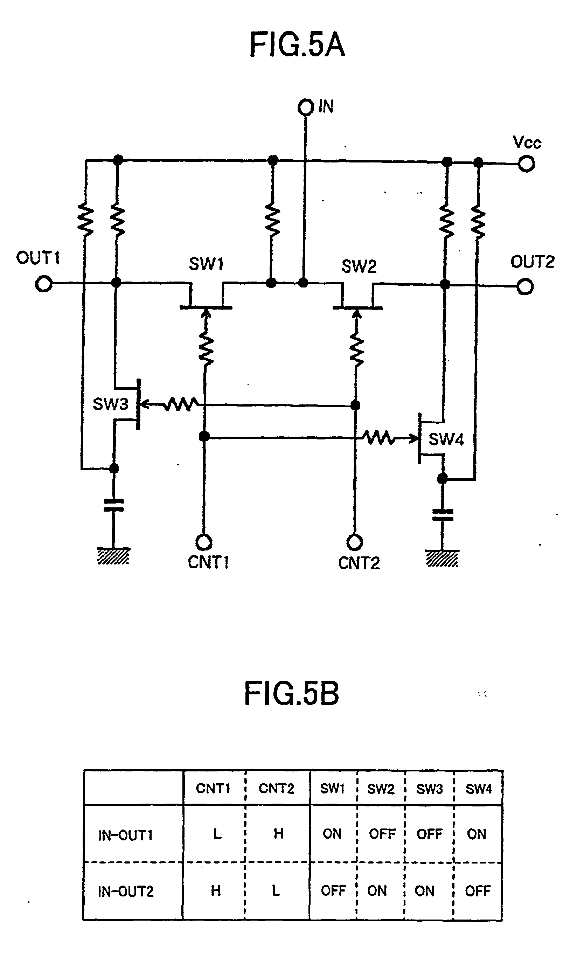

FIG. 5A shows a modification of the selector switch 131 in the band switching device 13 in which four switching elements SW1 through SW4 are incorporated so as to constitute the first and second transmission paths.

In the selector switch shown in FIG. 5A, the switching elements SW1-SW4 are turned ON or OFF in response to the control signals CNT1 and CNT2 sent by the control circuit 40. When the switching elements of one of the first transmission path (IN - OUT1) and the second transmission path (IN - OUT2) of the selector switch are turned ON, the remaining switching elements of the other path of the selector switch are turned OFF. When one of the control signals CNT1 and CNT2 is set at a low level "L" (or the logical "0"), the other of the control signals CNT1 and CNT2 is set at a high level "H" (or the logical "1"). "Vic" indicates an activation voltage of the switching elements SW1-SW4. FIG. 5B shows an operation of the selector switch of FIG. 5A.

In the present specification, the term "active element" is used to refer to not only a single semiconductor transistor or diode but also as an active element circuit including plural semiconductor transistors or diodes.

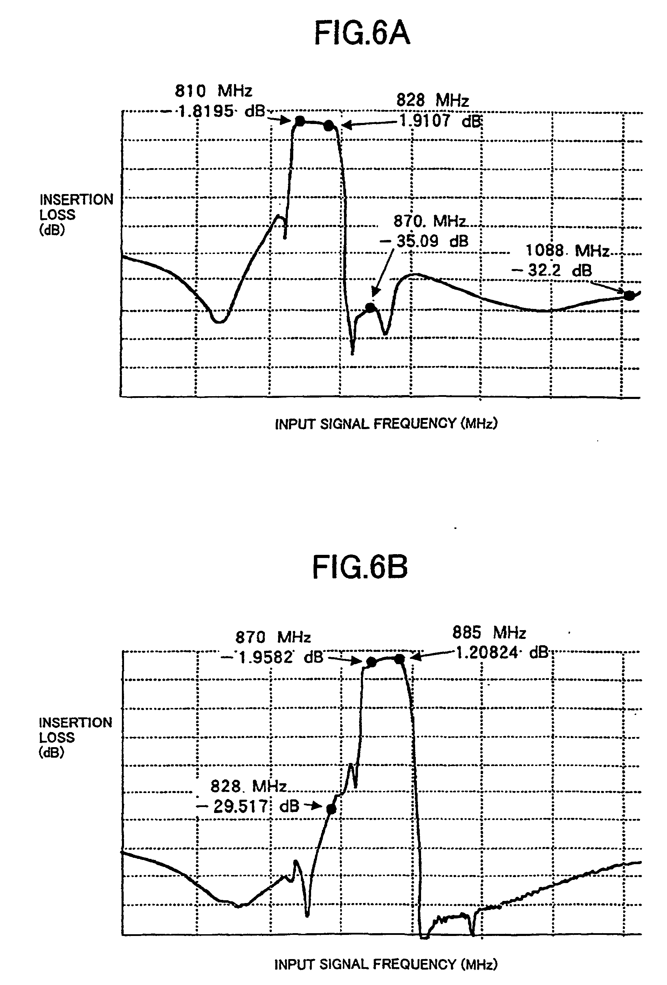

In the band switching device 13 of FIG. 3, the first band-pass filter (BPF1) 132 allows signals lying within the first band of 810-830 MHz to pass through the filter 132. FIG. 6A shows the insertion loss characteristics of the first band-pass filter 132. The second band-pass filter (BPF2) 133 allows signals lying within the second band of 870-885 MHz to pass through the filter 133. FIG. 6B shows the insertion loss characteristics of the second band-pass filter 133.

As shown in FIG. 6A and FIG. 6B, in the present embodiment, the insertion loss of each of the first and second band-pass filters 132 and 133 with respect to the rejection of the out-of-band signals is set at about 30 dB.

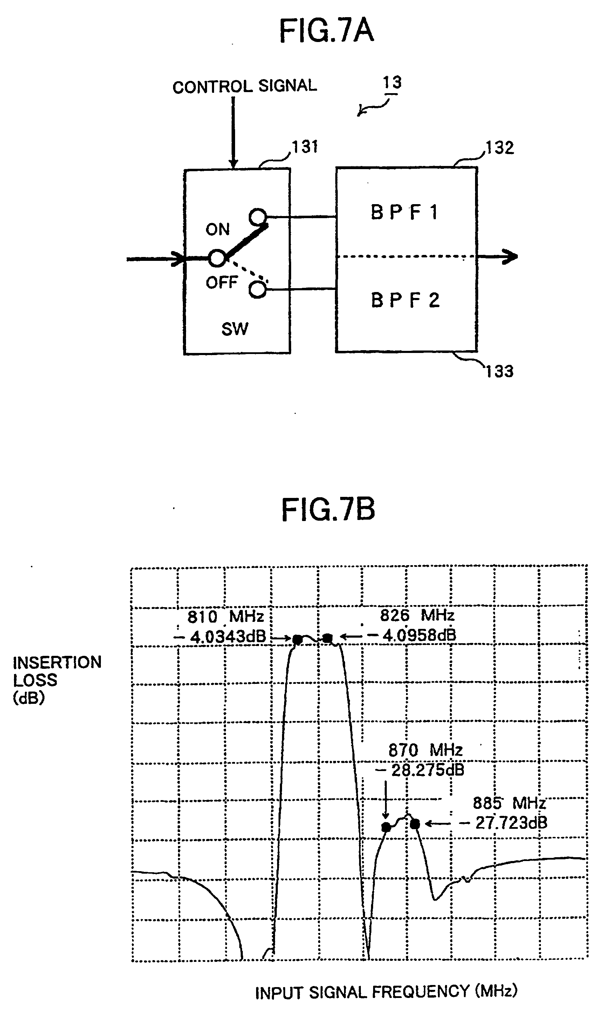

FIG. 7A shows a first state of the band switching device 13 when the first band-pass filter 132 is connected to the input of the switch 131. In the first state of the band switching device 13, shown in FIG. 7A, it is determined at the control circuit 40 that the received signal lies within the first band of 810-830 MHz, and the band switching device 13 is controlled by the control circuit 40 such that the received signal is passed through the filter 132. FIG. 7B shows the insertion loss characteristics of the band switching device 13 in the first state of FIG. 7A.

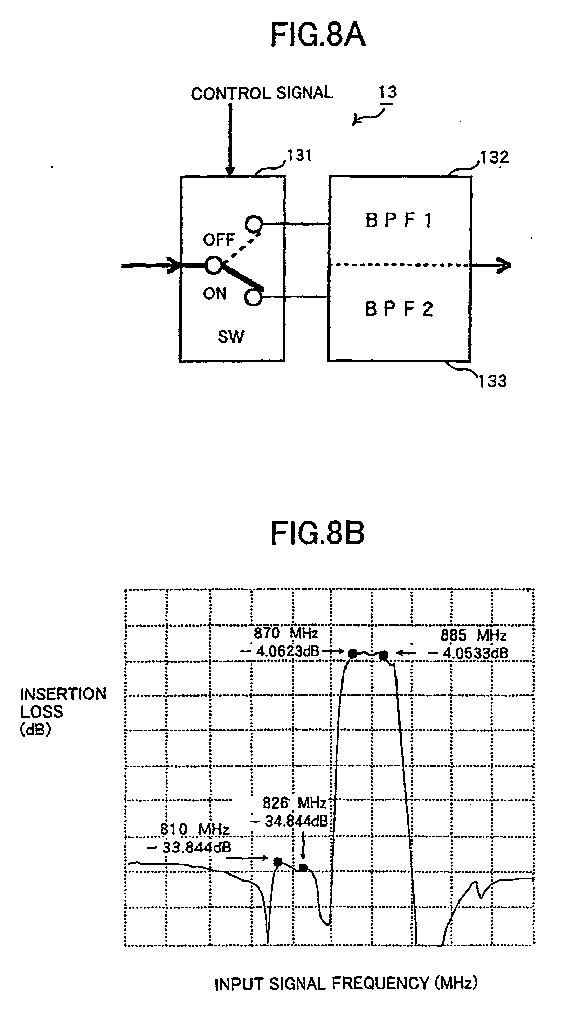

FIG. 8A shows a second state of the band switching device 13 when the second band-pass filter 133 is connected to the input of the switch 131. In the second state of the band switching device 13, shown in FIG. 8A, it is determined at the control circuit 40 that the received signal lies within the second band of 870-885 MHz, and the band switching device 13 is controlled by the control circuit 40 such that the received signal is passed through the filter 133. FIG. 8B shows the insertion loss characteristics of the band switching device 13 in the second state of FIG. 8A.

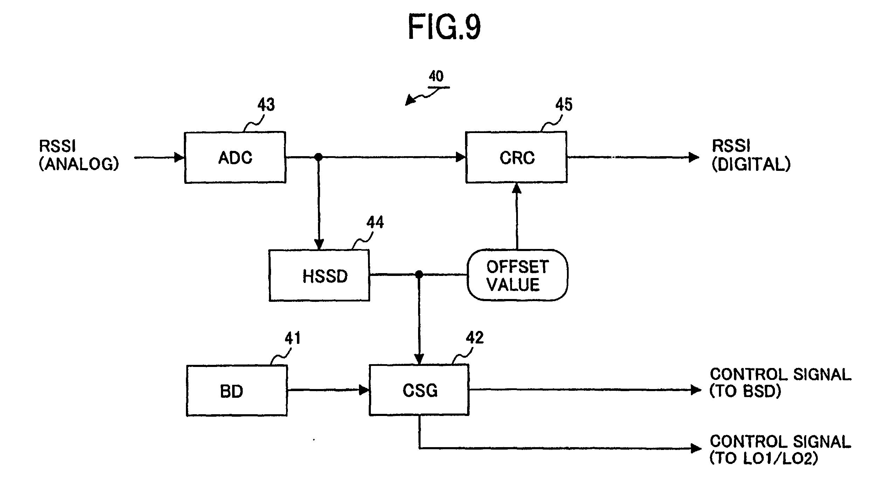

FIG. 9 shows a configuration of the control circuit 40 in the receiver portion of the radio communication system of FIG. 2.

As shown in FIG. 9, the control circuit 40 of the present embodiment generally comprises a band detection unit (BD) 41, a control signal generation unit (CSG) 42, an analog-to-digital converter (ADC) 43, a high-signal-strength determination unit (HSSD) 44, and a correction circuit (CRC) 45.

The band detection unit 41 detects a selected one of the first and second bands (810-830 MHz and 870-885 MHz) for the received signal designating the portable telephone 10 as the destination. The selected band is determined by the channel control of the base station 20, and an instruction for setting the selected band in the portable telephone 10 is supplied by the base station 20. The band detection unit 41 detects the selected band from the supplied instruction. The selected band, detected by the band detection unit 41, is supplied to the control signal generation unit 42.

In the receiver portion of the radio communication system of FIG. 2, the receiving-level detection unit 19 detects a received signal strength indication (RSSI) of the received signal at the output of the BPF 17, and supplies the analog signal indicative of the detected RSSI to the ADC 43. The ADC 43 converts the analog signal into a digital signal indicative of the detected RSSI. The digital signal (RSSI) is supplied from the ADC 43 to each of the correction circuit 45 and the high-signal-strength determination unit 44.

The high-signal-strength determination unit 44 determines whether the RSSI, indicated by the digital signal output by the ADC 43, exceeds a predetermined value. The result of the determination is supplied from the HSSD 44 to the control-signal generation unit 44. Further, the high-signal-strength determination unit 44 produces an offset value according to an amount of attenuation of the received signal passed through the BSD 13, and supplies the offset value to the correction circuit 45. This offset value is used to correct an RSSI signal that is transmitted from the portable telephone 10 to the base station 20 in order to notify the base station 20 of the received signal strength indication of the portable telephone 10.

The correction circuit 45 corrects the RSSI, indicated by the digital signal output by the ADC 43, based on the offset value sent by the HSSD 44, so that the corrected RSSI signal (digital) is produced. The corrected RSSI signal output by the correction circuit 45 is transmitted from the portable telephone 10 to the base station 20. When the RSSI output by the ADC 43 does not exceed the predetermined value (the normal signal strength case), the offset value is equal to 0 dB. On the other hand, when the RSSI output by the ADC 43 does exceed the predetermined value (the high signal strength case), the offset value is set to a value that substantially cancels the isolation of the switch 131 (or the insertion loss of the path in which the corresponding active element is turned OFF). In the latter case, the gain of the receiver portion is lowered due to the OFF state of the active element of the switch 131, and the offset value is added to the RSSI so as to cancel the isolation of the switch 131.

The control signal generation unit 42 generates control signals based on the selected band output by the band detection unit 41 and based on the result of the determination output by the HSSD 44. The control signal generation unit 42 supplies the resulting control signals CNT1 and CNT2 to the band switching device (BSD) 13, and supplies the resulting control signals to the local oscillators LO1 and LO2.

In the receiver portion of the radio communication system of FIG. 2, the receiving-level detection unit 19 may include a distortion detection unit which detects an amount of distortion of the received signal waveform relative to a reference-distortion amount for the waveform of the received signal designating the portable telephone 10 as the destination. When the amount of distortion detected by the distortion detection unit is above a predetermined value, the receiving-level detection unit 19 instructs the control circuit 40 so that the control-signal generation unit 42 supplies appropriate control signals to the band switching device 13 so as to reduce the amount of distortion of the received signal waveform to a desired level through the switching of the band switching device 13.

When it is demanded to provide a simple, small-size configuration of the radio communication system, the receiving-level detection unit 19 and the control circuit 40 may be partially or wholly constituted by a central processing unit (CPU) or a digital signal processor (DSP).

Next, a description will be given of an operation of the above-described portable telephone 10. In the present embodiment, when the RSSI indicated by the output signal of the ADC 43 is above the predetermined value, the control circuit 40 changes the selected one of the outputs of the switch 131 to another output through the switching of the band switching device 13 so as to reduce the RSSI by using the selected band-pass filter having corresponding insertion-loss characteristics.

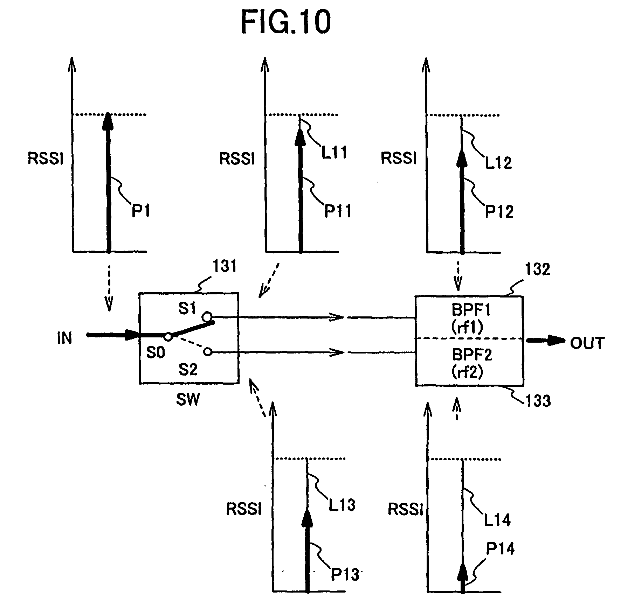

FIG. 10 shows an operation of the band switching device 13 in a normal mode. In the normal mode, the RSSI output by the ADC 43 does not exceed the predetermined value (the normal signal strength case), and the band switching device 13 operates as shown in FIG. 10.

As shown in FIG. 10, in the normal mode, the switching of the selector switch 131 is controlled by the control signals CNT1 and CNT2 sent by the control circuit 40, so that the input S0 of the switch 131 is connected to the first band-pass filter (BPF1) 132 via the selected one S1 of the outputs S1 and S2 of the switch 131. The active element of the first transmission path (S0 - S1) is turned ON, and the active element of the second transmission path (S0 - S2) is turned OFF. The first band-pass filter (BPF1) 132 allows signals lying within the first band of 810 - 830 MHz to pass through the filter 132.

The amount of attenuation with respect to the output signal of the first band-pass filter (BPF1) 132 in this case is substantially equal to the insertion loss (L11) of the switch 131 plus the insertion loss (L12) of the filter 132, which is relatively small. The amount of attenuation with respect to the output signal of the second band-pass filter (BPF2) 133 in this case is substantially equal to the insertion loss (L13) of the switch 131 plus the insertion loss (L14) of the filter 133, which is relatively large. The output signal of the entire band switching device 13 is a sum of the output signal of the first band-pass filter (BPF1) 132 and the output signal of the second band-pass filter (BPF2) 133, but the strength of the signal passed through the filter 132 is still larger than the strength of the signal passed through the filter 133.

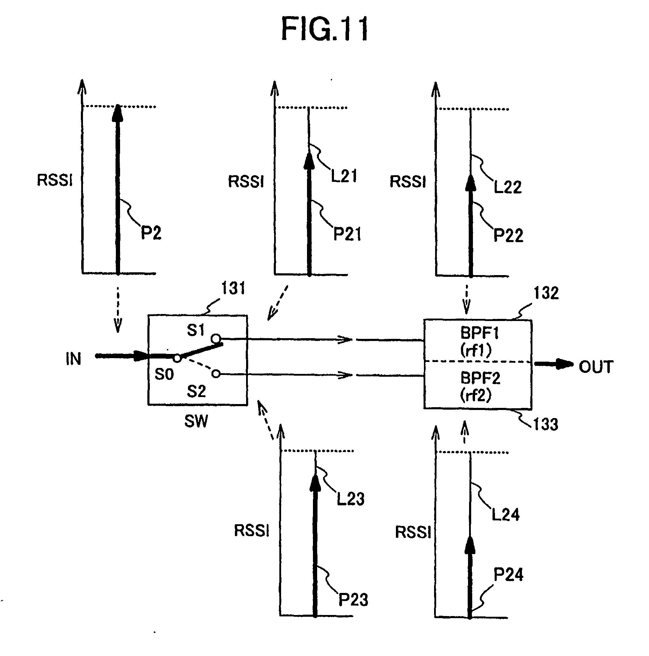

FIG. 11 shows an operation of the band switching device 13 in a high-signal-strength mode. In the high-signal-strength mode, the RSSI output by the ADC 43 exceeds the predetermined value (the high signal strength case), and the band switching device 13 operates as shown in FIG. 11.

As shown in FIG. 11, in the high-signal-strength mode, the switching of the selector switch 131 is controlled by the control signals CNT1 and CNT2 sent by the control circuit 40, so that the input S0 of the switch 131 is connected to the second band-pass filter (BPF2) 133 via the selected one S2 of the outputs S1 and S2 of the switch 131. The active element of the first transmission path (S0 - S1) is turned OFF, and the active element of the second transmission path (S0 - S2) is turned ON. The second band-pass filter (BPF2) 133 allows signals lying within the second band of 870 - 885 MHz to pass through the filter 133.

The amount of attenuation with respect to the output signal of the first band-pass filter (BPF1) 132 in this case is substantially equal to the insertion loss (L21) of the switch 131 plus the insertion loss (L22) of the filter 132. The amount of attenuation with respect to the output signal of the second band-pass filter (BPF2) 133 in this case is substantially equal to the insertion loss (L23) of the switch 131 plus the insertion loss (L24) of the filter 133. The output signal of the entire band switching device 13 is a sum of the output signal of the first band-pass filter (BPF1) 132 and the output signal of the second band-pass filter (BPF2) 133, and the amount of attenuation with respect to the output signal of the BSD 13 in the high-signal-strength mode is still larger than that of the BSD 13 in the normal mode.

As described above, when the RSSI indicated by the output signal of the ADC 43 is above the predetermined value (the high-signal-strength case), the control circuit 40 changes the selected one of the outputs of the switch 131 to another output through the switching of the band switching device 13 such that the RSSI (P12) in the normal mode is reduced to the RSSI (P24) in the high-signal-strength mode by using the selected band-pass filter 133 having the corresponding insertion-loss characteristics. The receiver portion of the portable telephone 10 and the portable telephone 10 of the present embodiment are effective in achieving a wide dynamic range without causing a distortion of the received signal waveform, by using a simple, small-size configuration.

When the switching of the selector switch 131 is performed in the high-signal-strength case, different-destination signals not designating the portable telephone 10 as the destination station are passed through the band-pass filter 133 to enter the first mixer 14 with a relatively high level. However, it is readily understood that the strength of the signal designating the portable telephone 10 as the destination, passed through the filter 133, is adequately higher than the strength of the different-destination signals passed through the filter 133. In addition, the conversion gain of the different-destination signals at the first mixer 14 is negligible, and the output level of such signals at the output of the first mixer 14 is sufficiently suppressed.

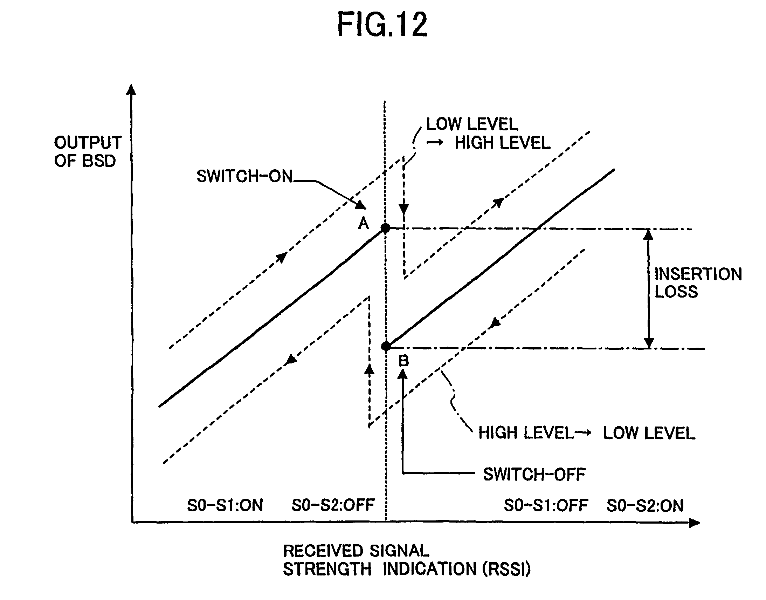

FIG. 12 shows a change in amplitude of the output signal of the band switching device 13 which is operating in a transient region between the normal mode and the high-signal-strength mode.

As shown in FIG. 12, when the RSSI (the measured power of the received signal) is increased from a low level, as indicated by the dotted-line upward arrow in FIG. 12, the band switching device 13 is operating in the normal mode until the predetermined value corresponding to the switch-on point "A" is reached. The active element of the first transmission path (S0 - S1) in the switch 131 is turned ON, and the active element of the second transmission path (S0 - S2) is turned OFF.

When the predetermined value corresponding to the point "A" is reached, the switching of the switch 131 is performed by the control circuit 40. The active element of the first transmission path (S0 - S1) is turned OFF, and the active element of the second transmission path (S0 - S2) is turned ON. The mode of the band switching device 13 is transferred to the high-signal-strength mode. At this instant, the amplitude of the output signal of the band switching device 13 is rapidly reduced due to the isolation of the switch 131. As the RSSI is increased to a high level, the amplitude of the output signal of the band switching device 13 is increased from the reduced point.

On the other hand, when the RSSI is decreased from a high level, as indicated by the dotted-line downward arrow in FIG. 12, the band switching device 13 is operating in the high-signal-strength mode until the predetermined value corresponding to the switch-off point "B" is reached. The active element of the first transmission path (S0 - S1) in the switch 131 is turned OFF, and the active element of the second transmission path (S0 - S2) is turned ON.

When the predetermined value corresponding to the point "B" is reached, the switching of the switch 131 is performed by the control circuit 40. The active element of the first transmission path (S0 - S1) of the switch 131 is turned ON, and the active element of the second transmission path (S0 - S2) is turned OFF. The mode of the band switching device 13 is transferred to the normal mode. At this instant, the amplitude of the output signal of the band switching device 13 is rapidly raised due to the isolation of the switch 131. As the RSSI is decreased to a low level, the amplitude of the output signal of the band switching device 13 is decreased from the raised point.

Accordingly, the receiver portion of the portable telephone 10 and the portable telephone 10 of the present embodiment can easily achieve a wide dynamic range without causing a distortion of the received signal waveform, by using a simple, small-size configuration.

The above-described operation of the band switching device 13 serves to improve the demodulation quality of the portable telephone 10. In the case of the PDC mobile telephone system, it is required for the portable telephone 10 to notify a measured power of the received signal to the base station 20. In the present embodiment, the correction circuit 45 is provided in the control circuit 40 to correct the RSSI, indicated by the digital signal output by the ADC 43, based on the offset value sent by the HSSD 44, so that the corrected RSSI signal is produced.

When the switching of the band switching device 13 is performed in the high-signal-strength case, the RSSI, indicated by the digital signal output by the ADC 43, may deviate from the actual power of the received signal. In the present embodiment, the corrected RSSI signal produced by the correction circuit 45 is transmitted from the portable telephone 10 to the base station 20. Hence, it is possible to notify the actual power of the received signal of the portable telephone 10 to the base station 20.

As described above with reference to FIG. 12, when the band switching device 13 is operating in the transient region between the normal mode and the high-signal-strength mode, the ON/OFF state of the switch 131 will significantly fluctuate to a slight change of the received signal strength. To eliminate the problem, the control circuit 40 may be configured to change the selected one of the outputs of the switch 131 to another output only when a continuous time the measured power of the received signal is above the predetermined value exceeds a predetermined time. For example, a timer is provided in the control circuit 40, and the continuous time the measured power of the received signal is above the predetermined value is measured by using the timer. When the measured continuous time exceeds the predetermined time, the control circuit 40 changes the selected one of the outputs of the switch 131 to another output.

Alternatively, the control circuit 40 may be configured to change the selected one of the outputs of the switch 131 to another output when the measured power of the received signal exceeds a first level, and to return the selected output of the switch 131 back to the original one when the measured power of the received signal is below a second level, lower than the first level.

In the above-described embodiments, the switching of the band switching device 13 (the selector switch 131) is performed based on whether the RSSI is above the predetermined value. Alternatively, the switching of the band switching device 13 may be performed in synchronism with either a front-end portion or a tail-end portion of each of slots in the received signal having the specified frequency. In such modification, when the RSSI detected after the switch 131 is turned ON or OFF is above the predetermined value, the switching of the band switching device 13 is controlled so as to increase the demodulation quality of the portable telephone 10.

When the ON/OFF state of the active element of the switch 131 is set to increase the insertion loss during the normal mode operation of the band switching device 13, there is a possibility that the demodulation quality becomes degraded. Specifically, in such a case, noises or unwanted conditions may occur during conversation on the portable telephone 10. However, when the ON/OFF state of the active element of the switch 131 is set to increase the insertion loss during the high-signal-strength mode, the gain of the receiver portion will be reduced, the amount of distortion will be decreased, and the demodulation quality will be increased.

In the above modification, the control circuit 40 is configured to determine whether the actual demodulation quality after the switching of the switch 131 is performed is appropriate. For this purpose, the switching of the band switching device 13 is performed in synchronism with either a front-end portion or a tail-end portion of each of slots in the received signal. Hence, according to the above modification, it is possible to avoid the occurrence of a demodulation error due to the change of the ON/OFF state of the active element of the switch 131.

In the above modification, when it is determined that the actual demodulation quality after the switching of the switch 131 is performed to increase the insertion loss is not appropriate, the ON/OFF state of the active element of the switch 131 is changed to the opposite state so as to decrease the insertion loss. The above control of the control circuit 40 is performed only when the RSSI is above the predetermined value. If the ON/OFF state of the active element of the switch 131 is set to increase the insertion loss during the normal mode operation, the frame synchronization for the received signal may not be maintained.

In the above modification, when the actual demodulation quality after the switching of the switch 131 is performed to increase the insertion loss is determined appropriate, the ON/OFF state of the active element of the switch 131 is maintained. In this case, the execution of the switching of the switch 131 is suitable to increase the demodulation quality. Further, in the above modification, when the actual demodulation quality does not change when the switching of the switch 131 is performed, the ON/OFF state of the active element of the switch 131 is set so as to decrease the insertion loss.

In the above modification, the control circuit 40 is configured to confirm that the actual demodulation quality, after the switching of the switch 131 is performed in synchronism with either a front-end portion or a tail-end portion of each of slots in the received signal, is appropriate. An appropriate amount of attenuation can be maintained while checking the actual demodulation quality. The radio communication system and the receiver portion of the radio communication system of the present embodiment are effective in achieving a simple control of the gain of the receiver portion.

Further, the radio communication system of the present invention is applicable to other mobile communication systems that are different from the PDC mobile telephone system of the above-described embodiment including the portable telephone 10. For example, the radio communication system of the present invention is applicable to mobile communication systems based on CDMA (code division multiple access), PHS (personal handy phone system) and GSM (global system for mobile communications) methods.

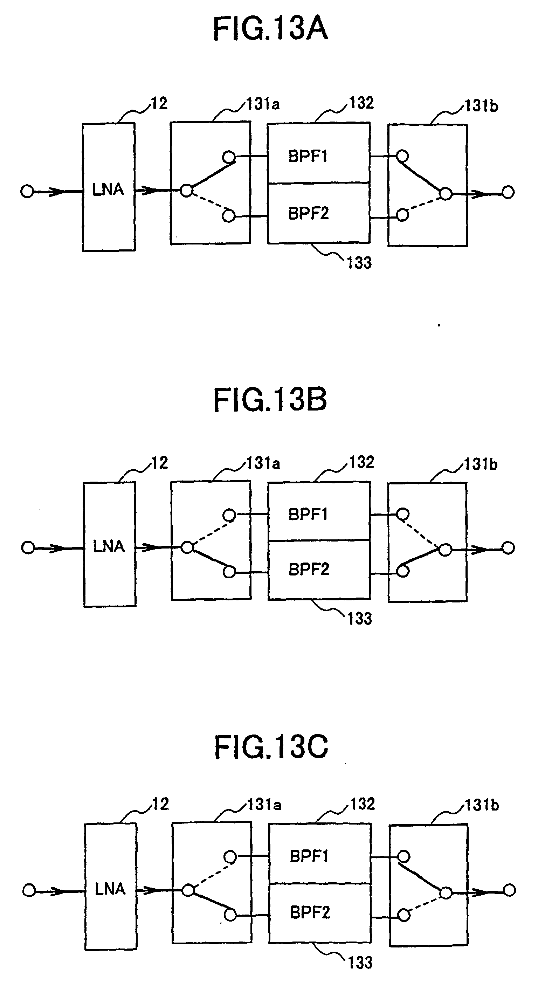

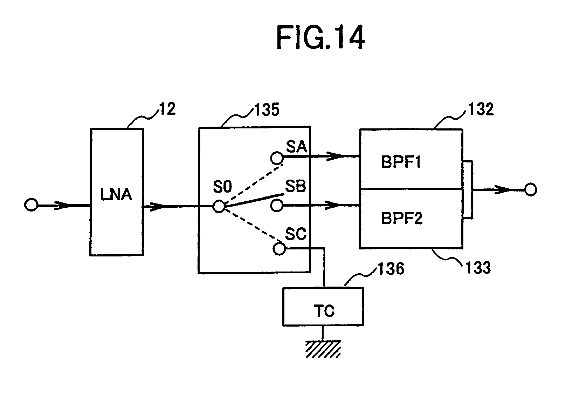

Further, the present invention is not limited to the above-described preferred embodiments, and variations and modifications may be made without departing from the scope of the present invention. For example, the following variations and modifications are possible.
(1) A radio communication system which includes: three or more band-pass filters (BPF) each allowing signals lying within a particular one of three or more distinct frequency bands to pass through the filter; a selector switch having an input and three or more outputs connected to the band-pass filters, the selector switch delivering a received signal at the input to one of the band-pass filters via a selected one of the outputs connected to the one of the band-pass filters; and a control circuit which controls switching of the selector switch in accordance with both a specified frequency contained in the received signal and a receiving level of the received signal, so that the input of the selector switch is connected to the selected one of the outputs so as to pass the received signal through the one of the band-pass filters.
   In the above modification, at least one of the three or more band-pass filters serves as the attenuation unit for the received signal. The three or more band-pass filters have insertion loss characteristics that are distinct from each other with respect to the input signal frequency, and the amounts of attenuation of the band-pass filters to the input signal frequency are also distinct from each other. In the above modification, high-pass filters (HPF) or low-pass filters (LPF) may be used instead of the band-pass filters since they are required to serve as the attenuation unit for the received signal.
(2) A radio communication system which includes an active element inserted and connected to a front-end part of the receiver portion. The control circuit 40 is configured to control the ON/OFF state of the active element in accordance with the receiving level of a received signal. When the active element is set in the ON state, the received signal is delivered through the active element to the receiver portion. When the active element is set in the OFF state, the active element serves as the attenuation unit for the received signal.
(3) A radio communication system which includes a modification of the band switching device that operates selectively in one of the manners shown in FIG. 13A, FIG. 13B and FIG. 13C. In the above modification, a first selector switch 131a and a second selector switch 131b are inserted and connected to a front-end part and a rear-end part of the two band-pass filters 132 and 133, respectively. In these figures, the solid line indicates the ON state of the active elements of the switches 131a and 131b, and then dotted line indicates the OFF state of the active elements of the switches 131a and 131b.
   The band switching device in the above modification operates in the normal mode as shown in FIG. 13A. The switching of the switches 131a and 131b is controlled such that only the BPF1 132 is selected to pass the received signal through the filter 132. The band switching device in the above modification operates in the high-signal-strength mode as shown in FIG. 13B or FIG. 13C. In the operation of FIG. 13B, the switching of the switches 131a and 131b is controlled such that only the BPF2 133 is selected to pass the received signal through the filter 133. In the operation of FIG. 13C, the switching of the switches 131a and 131b is controlled so as to pass the received signal through the filter 132 or the filter 133. The insertion loss of the band switching device when the switching of the switches 131a and 131b is performed in the high-signal-strength mode is varied for these cases.
(4) A radio communication system which includes a modification of the band switching device in which a one-input, three-output switch 135 is incorporated as shown in FIG. 14. In the above modification, the switch 135 is provided instead of the one-input, two-output switch 131 in the previous embodiment. The switch 135 has an input S0 to which the LNA 12 is connected, a first output SA connected to the BPF1 132, a second output SB connected to the BPF2 133, and a third output SC connected to a terminating circuit (TC) 136. The terminating circuit 136 is grounded. In FIG. 14, the solid line indicates the ON state of the active elements of the switch 135, and the dotted line indicates the OFF state of the active elements of the switch 135.

The band switching device of the above modification operates, in the normal mode, to control the switching of the switch 135 so that the BPF1 132 is selected to pass the received signal through the filter 132. In the high-signal-strength mode, the band switching device of the above modification operates to control the switching of the switch 135 so that the BPF 2 133 is selected to pass the received signal through the filter 133. When the RSSI is above a predetermined value that is higher than that of the high-signal-strength mode, the band switching device of the above modification operates to control the switching of the switch 135 so that the terminating circuit 136 is selected to inhibit the received signal from passing through the filters 132 and 133.

In the above modification of FIG. 14, the one-input, three-output switch 135 is provided. Alternatively, a one-input, multiple-output switch having four or more outputs may be used instead. In such embodiment, the RSSI is divided into three or more levels, the number of band-pass filters (BPF) is increased, and the total number of the outputs of the switch is equal to the number of the filters plus one.

## Claims

1. A radio receiver apparatus comprising:
a plurality of band-pass filters each allowing signals lying within a particular one of a plurality of separate, distinct frequency bands including separate center frequencies respectively to pass through the filter;
a selector switch having an input and a plurality of outputs connected to the plurality of band-pass filters, the selector switch delivering a received signal at the input to one of the plurality of band-pass filters via a selected one of the plurality of outputs connected to said one of the plurality of band-pass filters; and
a control unit controlling switching of the selector switch in accordance with a measured power of the received signal at an input of the control unit, so that the input of the selector switch is connected to the selected one of the plurality of outputs so as to pass the received signal through said one of the plurality of band-pass filters, wherein the control unit changes the selected one of the plurality of outputs of the selector switch to another output through the switching of the selector switch when the measured power of the received signal is above a predetermined value, and wherein, after the selected output of the selector switch is changed, the received signal passed through the selected band-pass filter is subjected to demodulation in the radio receiver apparatus.

2. The radio receiver apparatus according to claim 1 wherein the control unit comprises a correction unit which corrects the measured power of the received signal by adding an offset value, derived according to an amount of attenuation of the received signal passed through the selected band-pass filter, to the measured power of the received signal.

3. The radio receiver apparatus according to claim 2 wherein a notification indicating the measured power of the received signal, which power is corrected by said correction unit, is transmitted to a base station, the base station being a source station having transmitted said signal to the radio receiver apparatus.

4. A method of controlling a gain of a radio receiver apparatus which receives a signal having a specified frequency, comprising the steps of:
providing a plurality of band-pass filters each allowing signals lying within a particular one of a plurality of separate, distinct frequency bands including separate center frequencies respectively to pass through the filter;
providing a selector switch having an input and a plurality of outputs connected to the plurality of band-pass filters, the selector switch delivering a received signal at the input to one of the plurality of band-pass filters via a selected one of the plurality of outputs connected to said one of the plurality of band-pass filters;
measuring a power of the received signal at an input of a control unit of the radio receiver apparatus; and
controlling switching of the selector switch in accordance with the measured power of the received signal, so that the input of the selector switch is connected to the selected one of the plurality of outputs so as to pass the received signal through said one of the plurality of band-pass filters, wherein the selected one of the plurality of outputs of the selector switch is changed to another output through the switching of the selector switch when the measured power of the received signal is above a predetermined value, and wherein, after the selected output of the selector switch is changed, the received signal passed through the selected band-pass filter is subjected to demodulation in the radio receiver apparatus.

5. The method according to claim 4, wherein, in said controlling step, the switching of the selector switch is performed in synchronism with either a front-end portion or a tail-end portion of each of slots in the received signal having the specified frequency.

## Patentansprüche

1. Ein Funkempfängergerät mit:
- einer Vielzahl von Bandpassfiltern, von denen jedes Signale durch das Filter passieren lässt, die innerhalb eines bestimmten Frequenzbandes aus einer Vielzahl von getrennten, eindeutigen Frequenzbändern mit separaten Mittenfrequenzen liegen;
- einem Wahlschalter mit einem Eingang und einer Vielzahl von Ausgängen, die an eine Vielzahl von Bandpassfiltern angeschlossen sind, wobei der Wahlschalter ein empfangenes Signal am Eingang an eines aus der Vielzahl von Bandpassfiltern liefert über einen aus der Vielzahl von Ausgängen gewählten Ausgang, der an eines aus der Vielzahl der Bandpassfilter angeschlossen ist;
- einer Steuereinheit, die das Schalten des Wahlschalters gemäß einer gemessenen Leistung des empfangenen Signals an einem Eingang der Steuereinheit steuert, so dass der Eingang des Wahlschalters an den gewählten Ausgang aus der Vielzahl von Ausgängen angeschlossen ist, so dass das empfangene Signal durch eines aus der Vielzahl von Bandpassfiltern passieren kann, wobei die Steuereinheit den aus der Vielzahl von Ausgängen gewählten Ausgang des Wahlschalters zu einem anderen Ausgang durch Schalten des Wahlschalters ändert, wenn die gemessene Leistung des empfangenen Signals innerhalb eines vorbestimmten Wertes ist, und wobei, nachdem der gewählte Ausgang des Wahlschalters gewechselt wurde, das empfangene Signal, welches das gewählte Bandpassfilter passiert hat, im Funkempfängergerät der Demodulation unterworfen wird.

2. Das Funkempfängergerät nach Anspruch 1, **dadurch gekennzeichnet, dass** die Steuereinheit eine Korrektureinheit umfasst, welche die gemessene Leistung des empfangenen Signals korrigiert durch Addieren eines Offset-Wertes, der gemäß der Höhe der Dämpfung des empfangenen Signals, das das gewählte Bandpassfilter passiert hat, abgeleitet wird, und der gemessenen Leistung des empfangenen Signals.

3. Das Funkempfängergerät nach Anspruch 2, **dadurch gekennzeichnet, dass** eine Nachricht, die die gemessene Leistung des empfangenen Signals, dessen Leistung von der Korrektureinheit korrigiert wird, angibt, an die Basisstation gesendet wird, wobei die Basisstation eine Nachrichtenquelle ist, die das Signal an das Funkempfängergerät gesendet hat.

4. Ein Verfahren zur Regelung der Verstärkung eines Funkempfängergeräts, welches ein Signal mit einer spezifizierten Frequenz empfängt, mit den folgenden Schritten:
- Bereitstellen einer Vielzahl von Bandpassfiltern, von denen jedes Signale, die innerhalb eines bestimmten Frequenzbandes aus einer Vielzahl von getrennten, eindeutigen Frequenzbändern mit separaten Mittenfrequenzen liegen, das Filter passieren lässt;
- Bereitstellen eines Wahlschalters mit einem Eingang und einer Vielzahl von Ausgängen, die an eine Vielzahl von Bandpassfiltern angeschlossen sind, wobei der Wahlschalter ein empfangenes Signal am Eingang zu einem Bandpassfilter aus der Vielzahl von Bandpassfiltern liefert über einen gewählten Ausgang aus der Vielzahl von Ausgängen, der an das Bandpassfilter aus der Vielzahl von Bandpassfiltern angeschlossen ist;
- Messen einer Leistung des empfangenen Signals an einem Eingang der Steuereinheit des Radioempfängergeräts;
- Steuern des Schaltens des Wahlschalters gemäß der gemessenen Leistung des empfangenen Signals, so dass der Eingang des Wahlschalters angeschlossen ist an den gewählten Ausgang aus der Vielzahl von Ausgängen, so dass das empfangene Signal durch das Bandpassfilter aus der Vielzahl von Bandpassfiltern passiert, wobei der gewählte Ausgang aus der Vielzahl von Ausgängen des Wahlschalters zu einem anderen Ausgang verändert wird durch Schalten des Wahlschalters, wenn die gemessene Leistung des empfangenen Signals oberhalb eines vorbestimmten Wertes ist, und wobei, nachdem der gewählte Ausgang des Wahlschalters geändert worden ist, das empfangene Signal, das das gewählte Bandpassfilter passiert hat, der Demodulation im Radio-Empfängergerät unterworfen wird.

5. Das Verfahren nach Anspruch 4, **dadurch gekennzeichnet, dass** in dem Steuerschritt das Schalten des Wahlschalters in Synchronität durchgeführt wird mit entweder einem vorderen Teil oder einem hinteren Teil der jeweiligen Schlitze im empfangenen Signal mit der spezifizierten Frequenz.

## Revendications

1. Appareil récepteur radio comprenant :
une pluralité de filtres passe-bande permettant chacun à des signaux se trouvant dans une bande particulière d'une pluralité de bandes de fréquence distinctes et séparées comprenant des fréquences centrales séparées respectivement de passer à travers le filtre ;
un commutateur sélecteur possédant une entrée et une pluralité de sorties connectées à la pluralité de filtres passe-bande, le commutateur sélecteur délivrant un signal reçu à l'entrée à l'un de la pluralité de filtres passe-bande par une sortie sélectionnée parmi la pluralité de sorties connectées audit filtre de la pluralité de filtres passe-bande ; et
une unité de commande commandant la commutation du commutateur sélecteur en fonction d'une puissance mesurée du signal reçu à une entrée de l'unité de commande, de telle sorte que l'entrée du commutateur sélecteur soit connectée à la sortie sélectionnée parmi la pluralité de sorties de manière à faire passer le signal reçu à travers ledit filtre de la pluralité de filtres passe-bande, dans lequel l'unité de commande change la sortie sélectionnée parmi la pluralité de sorties du commutateur sélecteur en une autre sortie par la commutation du commutateur sélecteur lorsque la puissance mesurée du signal reçu est supérieure à une valeur prédéterminée, et dans lequel, une fois que la sortie sélectionnée du commutateur sélecteur a été changée, le signal reçu passé à travers le filtre passe-bande sélectionné est soumis à une démodulation dans l'appareil récepteur radio.

2. Appareil récepteur radio selon la revendication 1, dans lequel l'unité de commande comprend une unité de correction qui corrige la puissance mesurée du signal reçu en ajoutant une valeur de décalage, dérivée en fonction d'une quantité d'atténuation du signal reçu passé à travers le filtre passe-bande sélectionné, à la puissance mesurée du signal reçu.

3. Appareil récepteur radio selon la revendication 2, dans lequel une notification indiquant la puissance mesurée du signal reçu, laquelle puissance est corrigée par ladite unité de correction, est transmise à une station de base, la station de base étant une station source ayant transmis ledit signal à l'appareil récepteur radio.

4. Procédé pour commander un gain d'un appareil récepteur radio qui reçoit un signal ayant une fréquence spécifiée, comprenant les étapes consistant à :
fournir une pluralité de filtres passe-bande permettant chacun à des signaux se trouvant dans une bande particulière d'une pluralité de bandes de fréquence distinctes et séparées comprenant des fréquences centrales séparées respectivement de passer à travers le filtre ;
fournir un commutateur sélecteur possédant une entrée et une pluralité de sorties connectées à la pluralité de filtres passe-bande, le commutateur sélecteur délivrant un signal reçu à l'entrée à l'un de la pluralité de filtres passe-bande par une sortie sélectionnée parmi la pluralité de sorties connectées audit filtre de la pluralité de filtres passe-bande ;
mesurer une puissance du signal reçu à une entrée d'une unité de commande de l'appareil récepteur radio ; et
commander la commutation du commutateur sélecteur en fonction d'une puissance mesurée du signal reçu, de telle sorte que l'entrée du commutateur sélecteur soit connectée à la sortie sélectionnée parmi la pluralité de sorties de manière à faire passer le signal reçu à travers ledit filtre de la pluralité de filtres passe-bande, dans lequel la sortie sélectionnée parmi la pluralité de sorties du commutateur sélecteur est changée en une autre sortie par la commutation du commutateur sélecteur lorsque la puissance mesurée du signal reçu est supérieure à une valeur prédéterminée, et dans lequel, une fois que la sortie sélectionnée du commutateur sélecteur a été changée, le signal reçu passé à travers le filtre passe-bande sélectionné est soumis à une démodulation dans l'appareil récepteur radio.

5. Procédé selon la revendication 4, dans lequel, dans ladite étape de commande, la commutation du commutateur sélecteur est réalisée en synchronisme avec soit une partie d'extrémité avant soit une partie d'extrémité arrière de chacune des fentes dans le signal reçu ayant la fréquence spécifiée.
